# EUROPÄISCHE PATENTSCHRIFT

(11) **EP 1 010 651 B1**
(45) Veröffentlichungstag und Bekanntmachung des Hinweises auf die Patenterteilung: **17.03.2004**
(21) Anmeldenummer: 99124219.9
(22) Anmeldetag: 03.12.1999
(51) Int. Cl.: B65H 5/16, B29D 30/10, B29D 30/30

(54) **Vorrichtung zum Transportieren und Auflegen von Materialstreifen**
Device for transporting and depositing material strips
Dispositif pour transporter et déposer des bandes de materiau

(30) Priorität: 09.12.1998 DE 19856720
(43) Veröffentlichungstag der Anmeldung: 21.06.2000
(73) Patentinhaber: Continental Aktiengesellschaft, 30165 Hannover (DE)
(72) Erfinder: Berning, Klaus, 30938 Burgwedel (DE); Wedemeyer, Lutz, 31515 Wunstorf (DE)

(56) Entgegenhaltungen:
- EP-A- 0 623 451
- DE-A- 1 904 481
- PATENT ABSTRACTS OF JAPAN vol. 006, no. 199 (M-162), 8. Oktober 1982 (1982-10-08) -& JP 57 105336 A (YOKOHAMA RUBBER CO LTD:THE), 30. Juni 1982 (1982-06-30)

## Beschreibung

Die Erfindung betrifft eine Vorrichtung zum Transportieren von Materialstreifen aus Gummi oder gummiähnlichem Kunststoffmaterial und zum Auflegen solcher Materialstreifen auf einer Aufbautrommel für Luftreifen oder Teile von Luftreifen, insbesondere zum Auflegen von schmalen Apexstreifen auf eine Balgtrommel, wobei die Materialstreifen insbesondere vorlaufend aus einem Endlosmaterial auf Länge geschnitten und auf einem Vorlagetisch im Bereich der Vorrichtung positioniert werden, wobei die Vorrichtung schwenkbare und in Transportrichtung verfahrbare Aufnahmeeinrichtungen zum Erfassen der auf dem Vorlagetisch positionierten Materialstreifen an mindestens einem Ende, zu deren Transport bis in Auflageposition und zu deren Auflage auf die Aufbautrommel beinhaltet, wobei die Aufnahmeeinrichtungen in einer zur Oberfläche bzw. zum Umfang der Aufbautrommel im Wesentlichen tangentialen Transportrichtung verfahrbar sind und ein oder mehrere den Materialstreifen erfassende Nadeln aufweisen, die einen temporären und lösbaren Formschluss mit dem Materialstreifen aufbauen.

Bei der Herstellung eines Neureifens werden auf eine Reifenaufbautrommel zuerst die Innenplatte eines Reifens und anschließend eine Karkasse aufgebracht. Bei anschließend expandierter Aufbautrommel werden die Wulstkeme samt Apex gesetzt. Wulstkern und Apex sind hierbei bereits als eine vorgefertigte und auf einer separaten Trommel (Balgtrommel) hergestellte Einheit vorhanden und werden als vorgefertigte Ringe von der Seite auf die auf der Reifenaufbautrommel bereits befindlichen Lagen aufgeschoben und positioniert. Bei der Vorfertigung werden die als Streifenmaterial vorliegenden Apexprofile / Kemreiterprofile entweder per Hand oder mit Hilfe von kleinen Vakuumsaugnäpfen mit einem Ende auf der Balgtrommel fixiert und dann angerollt. Auf der Reifenaufbautrommel folgt dann der Hochschlagvorgang, indem die Karkassenlagenenden um die Wulstkerne gefaltet werden. Dieser Vorgang wird mit Hilfe von Bälgen durchgeführt. Anschließend werden eine weitere Karkassenlage - falls eine zweite Lage vorgesehen ist -, die Seitenstreifen (Seitenwandteile) und die Homprofile angebracht.

Die Reifenkarkasse ist nun fertiggestellt und kann von der Aufbautrommel, die wieder in ihre ursprüngliche Lage gebracht wird, entfernt werden.

Der weitere Aufbau zum fertigen Rohreifen beginnt mit dem Transfer der Reifenkarkasse zu einer zweiten Aufbaumaschine mit einer weiteren Aufbautrommel, die einen Bombierteil umfaßt. Auf einer gesonderten Gürteltrommel werden die Gürtellagen, im allgemeinen sind dies zwei oder drei gummierte Stahlkordlagen, aufgebracht und ggf. mit einer oder zwei Lagen einer Nylonbandage versehen. Zwischen einzelnen Gürtellagen können Gürtellpufferstreifen angeordnet werden. Auf diesen Gürtelverband wird schließlich noch der ggf. mit einer Unterplatte versehene Laufstreifen aufgebracht. Eine einen Tragering für den Gürtellaufstreifenverband umfassende Transfereinrichtung transportiert den Gürtellaufstreifenverband zur Reifenkarkasse und positioniert diesen über der Reifenkarkasse. Diese ist bereits zentriert und vorbombiert und wird nun vollends bombiert, mit dem Gürtellaufflächenpaket zusammengefügt, wobei nach dem Entfernen der Transfereinrichtung der Laufstreifen mitsamt dem Gürtelpaket angerollt wird.

Bei dem beschriebenen Verfahren handelt es sich um den sogenannten Zweistufenaufbau. Es ist auch üblich, ein Einstufenverfahren einzusetzen, bei dem die Karkassenherstellung und die Fertigstellung des Rohreifens innerhalb einer einzigen Reifenkonfektionsanlage mit mehreren zugeordneten Trommeln erfolgt.

Der fertiggestellte Rohreifen wird in einer entsprechenden Vulkanisationsform ausvulkanisert und erhält somit seine endgültige Gestalt mit eingeformtem Laufstreifenprofil und beschrifteten bzw. auch dekorativ gestalteten Seitenwänden.

Die bekannten Herstellverfahren setzen sich aus in ihren einzelnen Schritten exakt festgelegten Produktionsabläufen zusammen, die in ihrer Gesamtheit die Qualität und die Eigenschaften des fertigen Produktes mitbestimmen. U. a. ist hierbei besondere Sorgfalt angebracht beim Herstellen der als Einheit mit den Wulstkernen weiterzuverarbeitenden Apex- oder Kernreiterprofile, die in der Regel als Streifenmaterial mit mehr oder weniger dreieckigem Querschnitt vorliegen und mit einerder längeren Dreieckseiten auf der Balgtrommel aufgelegt, angerollt und im Endbereich miteinander verbunden werden.

Das Auflegen der Apexprofile bereitet dadurch Schwierigkeiten, daß die im Querschnitt im wesentlichen dreieckig ausgebildeten Profilstreifen ausgesprochen empfindlich auf mechanische Belastungen, auf Schnitte, auf Dehnungen und Biegungen reagieren und daß durch den über die Streifenbreite sich verjüngenden Querschnitt auch im noch plastischen Zustand durch die Geometrie bedingte unterschiedliche Festigkeitseigenschaften und Nachgiebigkeiten des Materials vorhanden sind, die eine exakt gerade Auflage der Ränder ohne Wellen und Biegungen sehr schwierig machen.

Weiter erschwert wird die Handhabung solcher Apexstreifen dadurch, daß durch die einseitig abgeschrägten Oberflächen solcher Profile deren Anlage an die Halte- und Transportelemente, wie etwa Saugnäpfe, nur sehr schwer anpaßbar ist, so daß in vielen Fällen noch eine Handauflage oder manuelle Korrektur erforderlich wird.

Neben der makrogeometrischen Ausbildung in Form einer Schräge sind auch Textureigenschaften der Oberfläche oft die Ursache für Schwierigkeiten bei der Handhabung. Werden nämlich bestimmte Zeiträume zwischen Austritt aus dem Extruder und Auflage auf die Trommel überschritten oder wird etwa Recycling-Material innerhalb solcher Streifen verarbeitet, so bildet sich oft eine unebene Oberfläche mit vielen kleinen Wellen, Riffeln oder Erhebungen aus, wonach dann auch der Einsatz von Vakuumsaugnäpfen nicht mehr möglich wird und in jedem Falle eine Handauflage erfolgen muß.

Ein weiteres Problem bei der Handhabung von Apexstreifen wird aufgeworfen durch den Trend zur immer häufigeren Verwendung von recht schmalen Apexprofilen, wie sie beispielsweise bei Niederquerschnittsreifen oder Sonderkonstruktionen erforderlich werden. Während bisher nämlich in aller Regel Apexstreifen zu verarbeiten waren, die in den langen Seiten des Dreiecks etwa eine Breite von 60 mm aufwiesen, kommen heute durchaus Apexstreifen zur Anwendung, deren entsprechende Breite lediglich 10 bis 15 mm beträgt.

Die Handhabung solcher schmalen Apexstreifen stößt mit den schon genannten Schwierigkeiten an eine weitere Grenze, nämlich an die der Miniaturisierung von Halteelementen für automatische Auflageeinrichtungen, wobei beispielsweise im Hinblick auf die üblicherweise verwendeten Sauger bei einem 15 mm breiten Apexstreifen bereits die Anwendungsgrenze erreicht ist und eine sichere Halterung oder Handhabung nicht mehr zu gewährleisten ist. Auch hier mußte demzufolge bisher dann wieder auf ein Handauflegenverfahren zurückgegriffen werden, was den gesamten Fertigungsprozess stört und wirtschaftlich ungünstig beeinflusst.

Eine Vorrichtung zum Transportieren und Aufhängen von Materialstreifen, welche gemäß dem Oberbegriff des Anspruches 1 ausgeführt ist, ist aus der EP-A-0 623 451 bekannt. Diese Vorrichtung ist zum Auflegen eines gummierten Textilgewebestreifens auf eine Reifenaufbautrommel vorgesehen. Der Textilgewebestreifen wird von einem Ballen abgewickelt und mit einem Führungssystem transportiert. Vor dem Auflegen wird der Textilgewebestreifen von einem abgesenkten Nadelkissen durchstoßen und hängt nach dem Abheben des Nadelkissens an dessen Nadeln. Das Nadelkissen wird in Richtung Reifenaufbautrommel verschoben und das Textilgewebe über eine Andrückplatte an das auf der Reifenaufbautrommel liegende Material gedrückt. Das Abschneiden des Textilgewebestreifens erfolgt nach dem Aufbringen.

Die US 3,904,471 (Kubinsky et al.) zeigt eine Reifenbauvorrichtung zum Auflegen eines schmalen Materialstreifens, die aus einem auf seiner Außenseite mit Nadeln bestückten Auflagerad besteht, welches kämmend bzw. tangential abrollend mit der Reifenaufbautrommel in Verbindung steht. Die Reifenaufbautrommel und das Nadelrad sind unter Druck aneinander gepresst und rollen aufeinander ab, sodass der aufzubringende schmale Streifen auf die Reifenaufbautrommel aufgepresst wird. Nach einer vollen Umfangsdehnung wird in der Nähe des Nadelrades der Streifen mit einem heißem Messer auf Länge geschnitten und der nachlaufende Teil ebenfalls auf die Trommel aufgepresst.

Nachteilig bei dieser Vorrichtung ist zum einen das starke Anpressen des Nadelrades an die zur Expansion mit einem flexiblen Mantel versehene Reifenaufbautrommel und der demzufolge außerordentlich hohe Verschließ der Oberfläche der Trommel und zum anderen die Ausbildung der Bewegungsverhältnisse beim Abrollen der beiden Trommeln aufeinander und beim Ausziehen der Nadeln aus dem aufgelegten Material. Die resultierende Bewegungsrichtung der Nadelspitze nach dem Verlassen des Berührungspunktes zwischen Trommel und Nadelrad ist tangential zum Außenumfang des Nadelrades gerichtet, während das aufgelegete Material der Kontur der Aufbautrommel folgt. Es ergibt sich somit eine Art "Abrissbewegung" durch die radiale Bewegungskomponente des Nadelstreifens, die dazu führt, dass die durch den Andruck entstandene Haftung des Materialstreifens an der Aufbautrommel zum Teil wieder gelöst wird, und dass relativ lange Ausreißspuren im Material zurückbleiben.

Falls Materialstreifen mit Verstärkungselementen durch eine solche Vorrichtung aufgelegt werden, dann es darüber hinaus passieren, dass einige der Verstärkungselemente beim Abrollen ausgezogen werden.

Für die Erfindung bestand also die Aufgabe, eine Transport- und Auflegevorrichtung zum Auflegen von Materialstreifen aus Gummi oder gummiähnlichem Kunststoffmaterial auf eine Aufbautrommel bereitzustellen, mit der auch schmale Apexstreifen jedweder geometrischen Konfiguration und mit beliebig gestalteter Oberfläche automatisch und ohne Handhabungsprobleme aufgelegt werden können und die konstruktiv einfach und zweckmäßig aufgebaut und sich in bereits bestehende Fertigungsbereiche problemlos eingliedern lässt.

Gelöst wird die Aufgabe durch die Merkmale des Hauptanspruches, wobei die Nadeln in den Materialsteifen lediglich eindringen und zur Transportrichtung des Materialstreifens rückwärtig geneigt angeordnet sind. Dabei ist insbesondere vorgesehen, dass die Aufnahmeeinrichtung zum Einstechen der Nadeln parallel zu den Nadelachsen verfahrbar ausgebildet ist.

Durch eine solche Ausbildung der Vorrichtung erreicht man zum einen eine von Oberflächenstruktur und Profilgeometrie unabhängige präzise Halterung und Fixierung der aufzulegenden Materialstreifen und zum anderen vermeidet man durch die im Wesentlichen tangentiale Transportrichtung, bei der das Material ohne Sprünge von der Trommelbewegung übernommen werden kann, eine stetige und störungsfreie Auflage auf der Aufbautrommel bzw. auf der Balgtrommel ohne Materialschädigungen.

Durch die Ausbildung der Halteelemente als in den Materialstreifen einstechende Nadeln ergibt sich eine örtliche auf ein Minimum begrenzte Beeinflussung eines Materialstreifens, wodurch zum einen die Auflage nahezu beliebig schmaler Materialstreifen, beispielsweise die Auflage von Apexstreifen mit einer Breite von 10 bis 15 mm, ermöglicht wird und wodurch zum anderen die Beschädigung des Materialstreifens als solchem durch das Eindringen von formschlussbildenden Elementen in einem so geringem Maße erfolgt, dass diese innerhalb der späteren Bearbeitung bereits während des Aufbauverfahrens durch z. B. Anrollen völlig rückführbar ist und ein schädigender Einfluss der durch das Einstechen der Nadeln entstehenden kleinen Löcher im Materialstreifen nicht mehr feststellbar ist.

Zudem lassen sich mit einer solchen Ausbildung der Haltelemente Materialstreifen mit beliebigen Querschnittsformen transportieren bzw. auflegen, da bei einem Einstechen durch im wesentlichen die gesamte Dicke des Materialstreifens auch verjüngte oder abgeschrägte Bereiche in der Nachbarschaft von dickeren Zonen des Materialstreifens problemlos fixierbar sind.

Bei mehreren über die Streifenbreite angeordnete Nadeln, von denen einige in dickere und einige in dünnere Bereiche einstechen, ergibt sich nämlich eine Abstützung der Querschnitte untereinander und eine gleichmäßige und angepaßte Halte-, Führungs- und Transportkraft durch die Aufteilung in viele kleine, eng benachbarte Kraftübertragungsbereiche.

Die zur Transportrichtung des Materialstreifens rückwärtige Neigung der Nadeln erzeugt bei dem Transport und bei der Auflage eine in Transportrichtung und eine normal zur Transportrichtung wirkende Kraftkomponente, die eine sichere Fixierung des Materialstreifens ermöglicht und ein Abrutschen während des Transport- oder Auflegevorgangs sicher vermeidet Wesentlich für die Minimierung der durch das Einstechen der Nadeln beeinflußten Bereiche ist dabei die zusätzliche Verfahrbarkeit der Aufnahmeeinrichtung parallel zu den Nadelachsen. Im Gegensatz etwa zu auf einer kreisförmigen oder schrägen Bahn einstechenden Nadeln oder in den Materialstreifen eindringenden Halteelementen vermeidet man hier beim Einstechen oder Herausziehen der Nadeln entstehende Ein- oder Auslaufspuren oder Furchen, so daß tatsächlich eine Begrenzung der beeinflußten Oberfläche des Materialstreifens auf jeweils den Nadelquerschnitt erfolgt.

Eine weitere vorteilhafte Ausbildung der Vorrichtung besteht darin, daß die in den Materialstreifen einstechenden Nadeln in Form von mindestens zwei hintereinander liegenden Nadelreihen von je mindestens vier nebeneinander liegenden und gleichmäßig über die Breite des Materialstreifens verteilten Nadeln angeordnet sind. Durch eine solche Vergleichmäßigung und Verteilung der Krafteinleitung in den Materialstreifen erreicht man nicht nur eine überaus sichere Führung und Halterung desselben, sondern reduziert durch die vorhandene Redundanz von Halteelementen auch die Ausfallzeiten und erreicht eine lediglich in größeren Zeitintervallen durchzuführende Wartung, da sich herausgestellt hat, daß selbst beim Ausfall einzelner Nadeln die Transport- und Auflagefunktion ausreichend erhalten bleibt, wodurch der Ersatz dann jeweils in planbare Stillstandzeiten der Maschine verlegt werden kann.

Eine weitere vorteilhafte Ausbildung ergibt sich dadurch, daß die Nadelspitzen der in den Materialstreifen einstechenden Nadeln in Form eines Zylinderabschnittes (Zylinderhufes) ausgebildet sind, wobei die Zylinderabschnittsflächen im wesentlichen senkrecht zur Transportrichtung und rückwärtig zur Transportrichtung geneigt angeordnet sind.

Solcher Art ausgebildete Nadeln stellen im Zusammenwirken mit ihrer rückwärtigen Neigung eine im wesentliche ellipsenförmige Fläche zur Übertragung der Vorschub- oder Transportkraft zur Verfügung und vermeiden durch die damit verringerte Flächenpressung einen Ausriß der Nadeln oder eine übermäßige Dehnung des Materials während der Zustellung zum Auflagepunkt. Weiterhin vereinfacht sich hierdurch die Bearbeitung der Nadelspitzen, da bei einer solchen Ausbildung lediglich ein Anfasen bzw. ein Anschrägen der Nadelspitzen erforderlich wird, wobei die Anschrägung der im Querschnitt runden Nadeln in einem Winkel von ca. 20 bis 35° zur Nadelachse erfolgt.

Eine weitere vorteilhafte Ausbildung besteht darin, daß die in den Materialstreifen einstechenden Nadeln in einem Winkel von maximal 55° rückwärtig zur Transportrichtung des Materialstreifens geneigt angeordnet sind. Durch eine solche Begrenzung der Neigung erreicht man bei der Übertragung der Führungs- und Transportkräfte die ausreichend sichere Ausbildung von Kraftkomponenten in Transportrichtung und normal zur Transportrichtung, so daß neben der Bereitstellung einer sicheren Führung auch ein Abrutschen des Materialstreifens in jedem Falle verhindert wird.

In einer weiteren vorteilhaften Ausbildung der Vorrichtung ist letztere auf einem im wesentlichen tangential zur Aufbautrommel verfahrbaren Rahmen angeordnet, wobei die Aufnahmeeinrichtungen um eine in Bezug zum Auflagepunkt auf die Aufbautrommel in Transportrichtung hintenliegende und in dem verfahrbaren Rahmen gelagerte Drehachse schwenkbar angeordnet sind.

Die bereits geschilderte vorteilhafte tangentiale Bewegung der Aufnahmeeinrichtungen erfolgt hierbei über einen die Aufnahmeeinrichtungen beinhaltenten Rahmen, wodurch erreicht wird, daß alle notwendigen Vorrichtungselemente gemeinsam verfahren werden und nicht über separate und untereinander zu korrelierende Steuerung einzeln zugestellt werden müssen. Dabei erfolgt die Schwenkbewegung der Aufnahmeeinrichtung um eine in Bezug zum Auflagepunkt auf die Aufbautrommel in Transportrichtung hintenliegende und in dem verfahrbaren Rahmen gelagert Drehachse. Das nach dem Auflegen des Materialsstreifen auf die Aufbautrommel und nach dem Rückzug der Nadel erfolgende Abheben der Aufnahmeeinrichtungen kann dann durch den vergrößerten Schwenkradius durch lediglich geringe Bewegungen von Hub- oder Schwenkelementen erfolgen, so daß dynamische Belastungen der gesamten Vorrichtung und eventuelle Auswirkungen auf die Positionierung des Materialstreifens vermieden werden können.

Vorteilhafterweise ist zwischen dem Vorlagetisch und der Aufbautrommel ein Gleit- und Führungsblech angeordnet, welches die Materialstreifen während des Transportes zum Auflagepunkt abstützt. Mit einem solchen Gleit- und Führungsblech reduzieren sich die durch die Nadeln aufzubringenden Kräfte normal zur Transportrichtung, da hier der größte Teil des Streifengewichtes vom Führungsblech aufgefangen wird, wobei der Materialstreifen im wesentlichen schleifend über das Führungsblech transportiert wird.

In einer weiteren und im Bezug auf die Konstruktion besonders kompakt ausgebildeten Ausführung der Vorrichtung ist eine in dem verfahrbaren Rahmen schwenkbare und in dem Bereich hinter dem Auflagepunkt der Aufbautrommel zustellbare Andrückrolle für die Materialstreifen vorgesehen. Bei einer solchen Vorrichtung befindet sich nach dem Abheben der Aufnahmeeinrichtungen die Andrückrolle bereits in Position und braucht nur noch auf die Aufbautrommel abgesenkt werden, wonach nach einer vollständigen Umdrehung der Aufbautrommel der Materialstreifen komplett aufgelegt ist und die Vorrichtung nach Hochschwenken der Andrückrolle insgesamt zurückgefahren werden kann zur Aufnahme des nächsten Materialstreifens.

Anhand eines Ausführungsbeispieles soll die Ausbildung und die Funktionsweise der erfindungsgemäßen Vorrichtung deutlicher dargestellt werden. Es zeigen:
- Fig. 1: eine erfindungsgemäße Vorrichtung in der Seitenansicht
- Fig. 2: eine Aufnahmeeinrichtung der erfindungsgemäßen Vorrichtung in einer vereinfachten und vorlaufenden Versuchsausführung mit nur einer Nadelreihe
- Fig. 3: eine in vorteilhafter Weise ausgebildete Nadel eines Halteelementes
- Fig. 4: eine den Kopfteil der in Figur 1 gezeigten Vorrichtung beinhaltende Draufsicht.

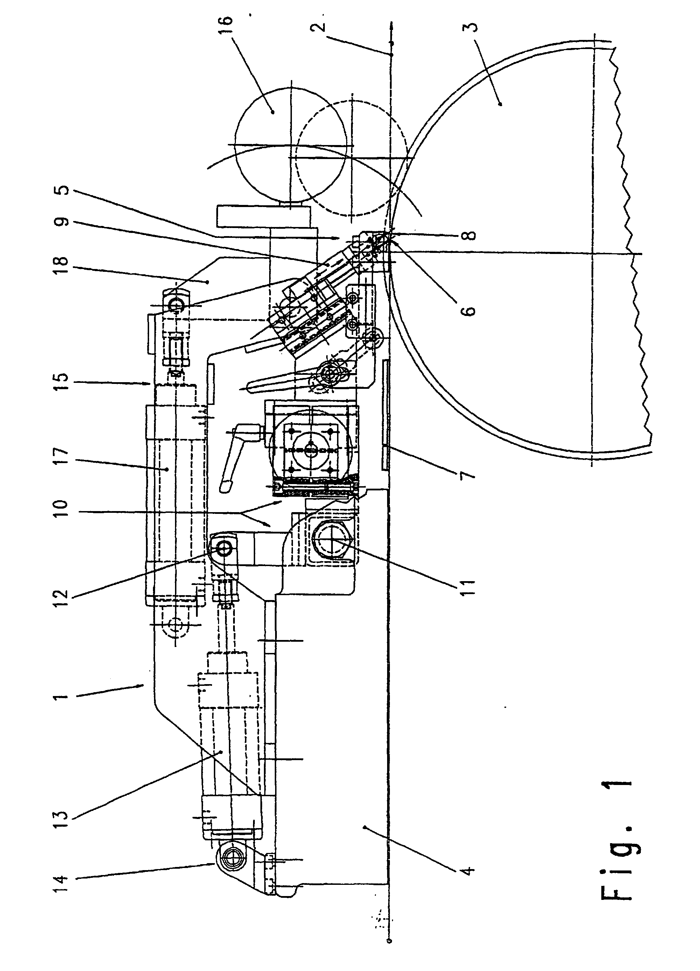

Die Figur 1 zeigt eine erfindungsgemäße Vorrichtung 1 in der Seitenansicht, bestehend aus einem in Transportrichtung 2 tangential zur Balgtrommel 3 verfahrbaren Rahmen 4, der kopfseitig mit einer Aufnahmeeinrichtung 5 versehen ist.

Die Aufnahmeeinrichtung 5 weist an ihrem vorderen Ende als Nadeln 6 ausgebildete Halteelemente auf, die in den ― hier nur abschnittsweise dargestellten ― schmalen Apexstreifen 7 einstechen und diesen bis zum Auflagepunkt 8 transportieren und ihn dann auf die Balgtrommel 3 auflegen.

Die Aufnahmeeinrichtung 5 ist zum Einstechen der Nadeln parallel zu den Nadelachsen verfahrbar ausgebildet und kann dazu mit Hilfe eines Zylinders 9 in dieser Richtung vor und zurück bewegt werden.

Die Aufnahmeeinrichtung mit zugehörigen Zentrier- und Befestigungselementen ist dabei an einem Kniehebel 10 angeordnet, welcher um eine in dem Rahmen 4 gelagerte Drehachse 11 schwenkbar mit dem Rahmen verbunden ist. Die Schwenkbewegung erfolgt dabei über den auf den oberen Gelenkpunkt 12 des Kniehebels wirkenden Zylinder 13, der im zum Rahmen 4 gehörigen Lagerbock 14 angelenkt ist.

Weiterhin beinhaltet die Vorrichtung eine über einen am Rahmen 4 angeflanschten U-förmigen Haltebügel 15 schwenkbar gelagerte Andrückrolle 16, die über einen Zylinder 17 und mit Hilfe eines Hebels 18 hinter dem Auflagepunkt 8 der Balgtrommel 3 zustellbar ist und die zum Andrücken des auf die Balgtrommel aufgelegten Materialstreifens dient. Die Zustellposition der Andrückrolle ist hier gestrichelt dargestellt.

Des weiteren beinhaltet die Vorrichtung eine Reihe von im wesentlichen über Klemmverbindungen und -hebel wirkende Feststell- und Justiereinrichtungen, die hier im einzelnen nicht näher dargestellt sind.

Zur Beschreibung der Funktion wird von der in der Figur 1 in Auflageposition dargestellten Vorrichtung ausgegangen. Sobald diese Position erreicht ist und der Materialstreifen 7 den Auflagepunkt 8 erreicht hat, werden die in zwei Reihen angeordneten Nadeln 6 durch Rückfahrt des Zylinders 9 aus dem Materialstreifen gezogen, der durch seine natürliche Anfangsklebrigkeit auf dem Umfang der Balgtrommel 3 haften bleibt. Danach beginnt die Balgtrommel zu rotieren und die Andrückrolle 16 wird durch Ausfahren des Zylinders 17 in Arbeitsposition hinter dem Auflagepunkt zugestellt, wonach der gesamte Materialstreifen über eine Trommeldrehung auf die Balgtrommel aufgewickelt wird und die Enden mit Stoß oder überlappend verbunden werden. Danach wird die Andrückrolle 16 durch Zurückfahren des Zylinders 17 in Bereitsschaftsposition gefahren. Anschließend leitet das Anziehen des Zylinders 13 die Rückfahrbewegung ein und schwenkt zunächst die Aufnahmeeinrichtung um die Drehachse 11 in eine von der Balgtrommel 3 abgehobene Rückfahrposition. Sobald diese Rückfahrposition erreicht ist, bewegt sich der gesamte Rahmen 4 tangential entgegen der Transportrichtung zurück bis zu einem hier nicht dargestellten Vorlagetisch, auf dem ein neuer Materialstreifen auf einer waagerechten Unterlage aufgenommen werden kann.

Zur Aufnahme des Materialstreifens fährt zunächst der Zylinder 13 aus und schwenkt über den Kniehebel 10 die Aufnahmeeinrichtung wieder in den Aufnahmezustand, der relativ zum Rahmen 4 dem in der Figur 1 gezeigten Auflegezustand entspricht.

Der neu aufzulegende Materialstreifen befindet sich dann mit einem Ende unterhalb der Nadeln 6 der Aufnahmeeinrichtung 5. In dieser Position fährt nun die Aufnahmeeinrichtung durch Ausfahren des Zylinders 9 parallel zu den Nadelachsen auf den Materialstreifen zu, bis die Nadeln in den Materialstreifen eingedrungen sind und diesen fast vollständig durchstochen haben.

Danach zieht der auf den Kniehebel 10 wirkende Zylinder 13 wieder an und schwenkt die Aufnahmeeinrichtung mitsamt den nun fixierten Apexstreifen 7 nach oben, wonach der Rahmen 4 wiederum in einer im wesentlichen tangentialen Transportrichtung zum Umfang der Balgtrommel vorfährt und der Apexstreifen an seinem vorderen Ende leicht angehoben schleifend über ein hier nicht näher dargestelltes Gleit- und Führungsblech gezogen wird, bis der Rahmen und damit die gesamte Vorrichtung in der in der Figur 1 gezeigten Position angelangt ist.

In dieser Position fährt der Zylinder 13 aus und schwenkt über den Kniehebel 10 die Aufnahmeeinrichtung exakt in Auflegeposition, wodurch der Materialstreifen am Außenumfang der Balgtrommel abgelegt bzw. dort angeklebt wird.

Danach erfolgt wieder das anfangs bereits beschriebene Zurückziehen der Nadeln und die weiteren Verfahrensschritte zum Aufbringen des Apexstreifens auf die Trommel.

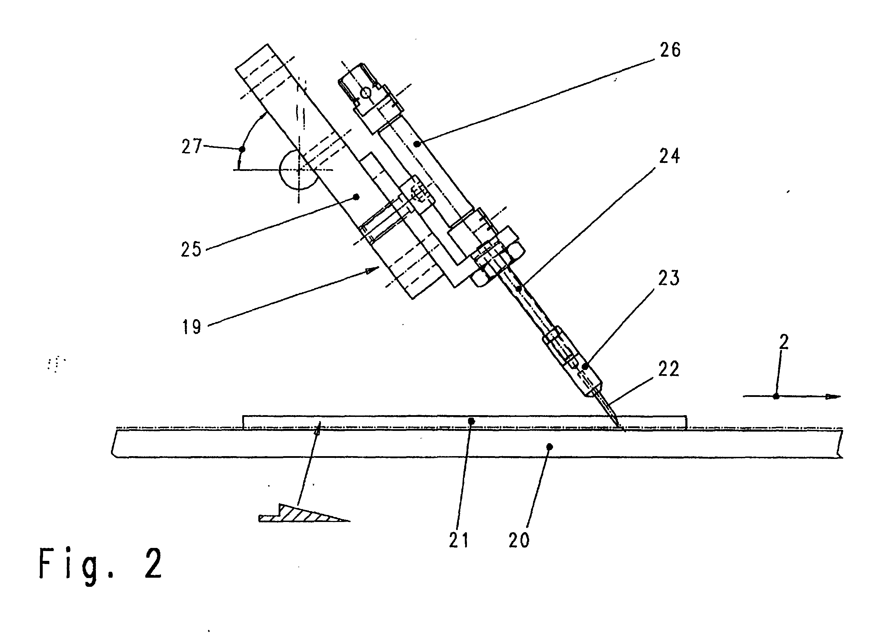

Die Figur 2 zeigt eine Aufnahmeeinrichtung in vereinfachter Form mit nur einer Nadelreihe, welche als Versuchsausführung im Einsatz war und noch einmal das Arbeitsprinzip der erfindungsgemäßen Vorrichtung im Hinblick auf die Aufnahmeeinrichtung verdeutlicht

Gezeigt ist hier die Position der Aufnahmeeinrichtung 19 über einen Vorlagetisch 20, auf dem ein bereits auf Länge geschnittener extrudierter Apexstreifen 21 der Aufnahmeeinrichtung vorgelegt ist. Der Apexstreifen 21 besitzt dabei das im unteren Bereich der Zeichnung skizzenhaft dargestellte Querschnittsprofil, wobei die Breite des hier vergrößerten Apexstreifens 12,5 mm beträgt.

Die Aufnahmeeinrichtung 19 weist dabei als Nadeln ausgebildete Halteelemente 22 auf, deren Spitzen in Form eines Zylinderabschnittes (Zylinderhufes) abgeschrägt sind. Es sind hier drei Nadeln nebeneinander im Nadelhalter 23 angeordnet, welcher wiederum an der Kolbenstange 24 eines in einem Halter 25 verschraubten Zylinders 26 befestigt ist.

Der größte Zylinderhub ist in der gezeigten Position bereits erreicht und die Kolbenstange ist soweit ausgefahren, daß die Nadeln 22 parallel zu den Nadelachsen in den Materialstreifen/Apexstreifen 21 eingefahren sind.

Die Nadeln sind in Bezug auf die Transportrichtung 2 durch eine entsprechende Fixierung des Halters 25 rückwärtig in einem Winkel 27 von 52,5° geneigt angeordnet.

In der hier gezeigten Position ist der Apexstreifen gefaßt und fixiert und kann dann durch Schwenken der Aufnahmeeinrichtung und Vorschub in Transportrichtung tangential zur Balgtrommel verfahren werden, wonach die Auflage in der bereits beschriebenen Weise erfolgt und die Aufnahmeeinrichtung zurückgefahren wird.

Der Deutlichkeit halber sind in der Figur 2 die übrigen Einrichtungen der Vorrichtung ― wie Rahmen, Kniehebel, Schwenkzylinder etc. nicht eingezeichnet.

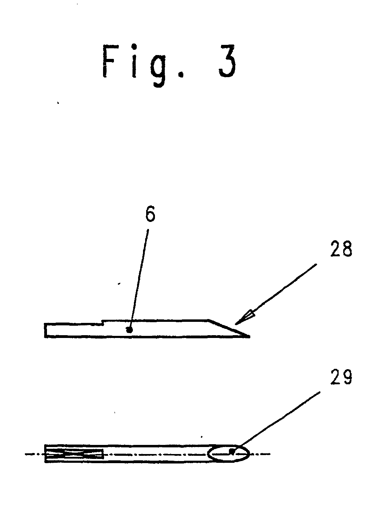

Die Figur 3 zeigt noch einmal eine Nadel 6 in der Detaildarstellung, wobei deutlich der Zylinderabschnitt (Zylinderhuf) 28 erkennbar ist, der die zur Kraftübertragung vorteilhafte elliptische Anlagefläche 29 erzeugt

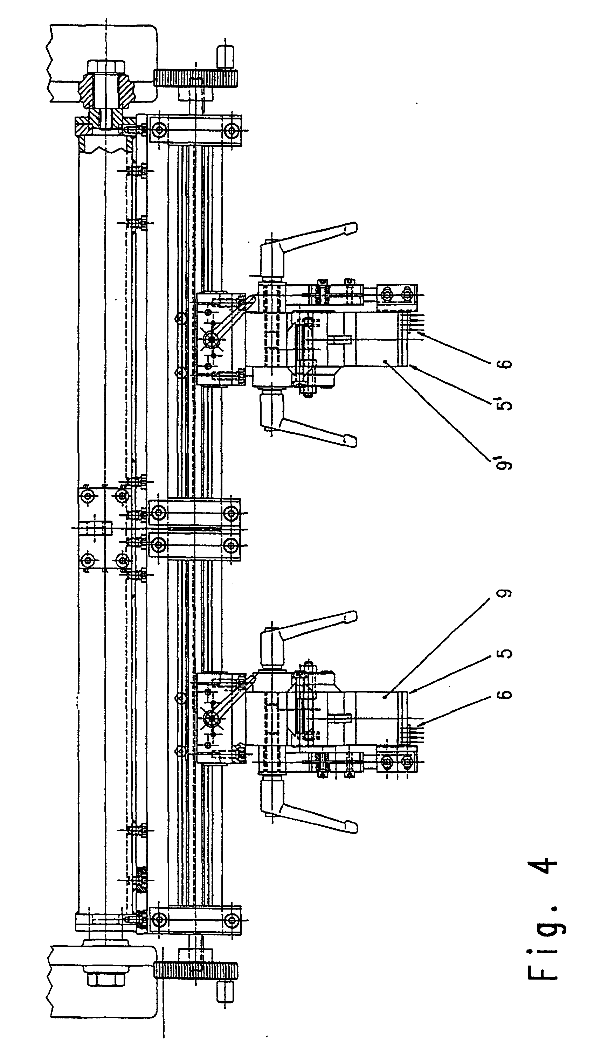

Die Figur 4 zeigt noch einmal den Kopfbereich der in der Figur 1 dargestellten Vorrichtung in vergrößerter Draufsicht. Neben den hier nicht näher beschriebenen Klemm- und Justierelementen zur Einstellung der erfindungsgemäßen Vorrichtung und der Aufnahmeeinrichtungen erkennt man deutlich die hier in der üblichen Doppelanordnung zur Auflage von zwei Apexstreifen vorgesehenen Aufnahmeeinrichtungen 5 und 5' sowie die jeweils vier nebeneinander liegenden Nadeln 6 der ersten Nadelreihe, welche über Zylinder 9 und 9', hier ausgebildet als mit Führungselementen versehene Flachzylinder, parallel zu den Nadelachsen verfahrbar ausgebildet sind.

### Bezugszeichenliste

- 1: Vorrichtung zum Transportieren und Auflegen von Materialstreifen
- 2: Transportrichtung
- 3: Aufbautrommel
- 4: Rahmen
- 5: Aufnahmeeinrichtung
- 6: Nadel
- 7: Apexstreifen
- 8: Auflagepunkt
- 9: Zylinder
- 10: Kniehebel
- 11: Drehachse
- 12: oberer Gelenkpunkt des Kniehebels
- 13: Zylinder
- 14: Lagerbock
- 15: Haltebügel
- 16: Andrückrolle
- 17: Zylinder
- 18: Hebel
- 19: Aufnahmeeinrichtung
- 20: Vorlagetisch
- 21: Apexstreifen
- 22: Nadel
- 23: Nadelhalter
- 24: Kolbenstange
- 25: Halter
- 26: Zylinder
- 27: Winkel
- 28: Zylinderabschnitt
- 29: elliptische Anlagefläche

## Patentansprüche

1. Vorrichtung zum Transportieren von Materialstreifen (7, 21) aus Gummi oder gummiähnlichem Kunststoffmaterial und zum Auflegen solcher Materialstreifen auf einer Aufbautrommel (3) für Luftreifen oder Teile von Luftreifen, insbesondere zum Auflegen von schmalen Apexstreifen auf eine Balgtrommel, wobei die Materialstreifen (7, 21) insbesondere vorlaufend aus einem Endlosmaterial auf Länge geschnitten und auf einem Vorlagetisch (20) im Bereich der Vorrichtung positioniert werden, wobei die Vorrichtung schwenkbar und in Transportrichtung verfahrbare Aufnahmeeinrichtungen (5, 19) zum Erfassen der auf dem Vorlagetisch (20) positionierten Materialstreifen (7, 21) an mindestens einem Ende, zu deren Transport bis in Auflageposition und zu deren Auflage auf die Aufbautrommel (3) beinhaltet, wobei die Aufnahmeeinrichtungen (5, 19) in einer zur Oberfläche bzw. zum Umfang der Aufbautrommel (3) im Wesentlichen tangentialen Transportrichtung (2) verfahrbar sind und ein oder mehrere den Materialstreifen (7, 21) erfassende Nadeln (6) aufweisen, die einen temporären und lösbaren Formschluss mit dem Materialstreifen (7, 21) aufbauen,
**dadurch gekennzeichnet,**
**dass** die Nadeln(6) in den Materialsteifen (7, 21) lediglich eindringen und zur Transportrichtung (2) des Materialstreifens (7, 21) rückwärtig geneigt angeordnet sind.

2. Vorrichtung nach Anspruch 1, **dadurch gekennzeichnet, dass** die Aufnahmeeinrichtung (5, 19) zum Einstechen der Nadeln (6) parallel zu den Nadelachsen verfahrbar ausgebildet ist.

3. Vorrichtung nach Anspruch 1 oder 2, **dadurch gekennzeichnet, dass** die in den Materialstreifen einstechenden Nadeln (6) in Form von mindestens zwei hintereinanderliegenden Nadelreihen von je mindestens vier nebeneinanderliegenden und gleichmäßig über die Breite des Materialstreifens verteilten Nadeln angeordnet sind.

4. Vorrichtung nach Anspruch 1, 2 oder 3, **dadurch gekennzeichnet, dass** die Nadelspitzen der in den Materialstreifen einstechenden Nadeln (6) in Form eines Zylinderabschnittes, d.h. Zylinderhufes, (28) ausgebildet sind, wobei die Zylinderabschnittsfläche (29) im Wesentlichen senkrecht zur Transportrichtung und rückwärtig zur Transportrichtung geneigt angeordnet sind.

5. Vorrichtung nach Anspruch 1 bis 4, **dadurch gekennzeichnet, dass** die in den Materialstreifen einstechenden Nadeln (6) in einem Winkel von maximal 55° rückwärtig zur Transportrichtung (2) des Materialstreifens (7, 21) geneigt angeordnet sind.

6. Vorrichtung nach einem der Ansprüche 1 bis 5, **dadurch gekennzeichnet, dass** die Vorrichtung auf einem im Wesentlichen tangential zur Aufbautrommel verfahrbaren Rahmen (4) angeordnet ist und die Aufnahmeeinrichtungen um eine in Bezug zum Auflagepunkt auf die Aufbautrommel (3) in Transportrichtung hintenliegende und in dem verfahrbaren Rahmen gelagerte Drehachse (11) schwenkbar angeordnet sind.

7. Vorrichtung nach Anspruch 1 bis 6, **dadurch gekennzeichnet, dass** zwischen Vorlagetisch und Aufbautrommel ein Gleit- und Führungsblech angeordnet ist, welches die Materialstreifen während des Transportes zum Auflagepunkt abstützt.

8. Vorrichtung nach Anspruch 6 oder 7, **dadurch gekennzeichnet, dass** eine in dem verfahrbaren Rahmen (4) schwenkbare und in den Bereich hinter dem Auflagepunkt der Aufbautrommel (3) zustellbare Andrückrolle (16) für die Materialstreifen vorgesehen ist.

## Claims

1. Apparatus for transporting material strips (7, 21) formed from rubber or rubber-like plastics material and for depositing such material strips onto a building drum (3) for pneumatic tyres or parts of pneumatic tyres, more especially for depositing narrow apex strips onto a bellows drum, the material strips (7, 21) being cut to length from an endless material, more especially in an advancing manner, and being positioned on a pattern table (20) in the region of the apparatus, the apparatus including receiving means (5, 19), which are pivotable and displaceable in the direction of transportation, for gripping the material strips (7, 21), which are positioned on the pattern table (20), at at least one end, to transport them into a depositing position and to deposit them onto the building drum (3), the receiving means (5, 19) being displaceable in a direction of transportation (2) which is substantially tangential relative to the surface or respectively the circumference of the building drum (3), and having one or more needles (6) which grip the material strip (7, 21) and build-up a temporary and detachable form-fitting connection with the material strip (7, 21), **characterised in that** the needles (6) merely penetrate the material strip (7, 21) and are disposed in a rearwardly inclined manner relative to the direction of transportation (2) of the material strip (7, 21).

2. Apparatus according to claim 1, **characterised in that**, for the piercing of the needles (6), the receiving means (5, 19) is displaceable parallel to the needle axes.

3. Apparatus according to claim 1 or 2, **characterised in that** the needles (6), which pierce the material strip, are in the form of at least two rows of needles which are situated one behind the other and each comprise at least four needles which lie adjacent one another and are distributed uniformly over the width of the material strip.

4. Apparatus according to claim 1, 2 or 3, **characterised in that** the points of the needles (6), which pierce the material strip, are in the form of a cylinder portion, i.e. ungula of a cylinder, (28), the cylinder portion face (29) being disposed substantially perpendicularly relative to the direction of transportation and in a rearwardly inclined manner relative to the direction of transportation.

5. Apparatus according to claims 1 to 4, **characterised in that** the needles (6), which pierce the material strip, are disposed in a rearwardly inclined manner relative to the direction of transportation (2) of the material strip (7, 21) at a maximum angle of 55°.

6. Apparatus according to one of claims 1 to 5, **characterised in that** the apparatus is disposed on a frame (4) which is displaceable substantially tangentially relative to the building drum, and the receiving means are disposed so as to be pivotable about an axis of rotation (11) which, when viewed with respect to the direction of transportation, is disposed downstream of the point for deposition onto the building drum (3) and is situated in the displaceable frame.

7. Apparatus according to claims 1 to 6, **characterised in that** a slide-and-guide plate, which supports the material strips during the transportation to the deposit point, is disposed between the pattern table and the building drum.

8. Apparatus according to claim 6 or 7, **characterised in that** a nip roller (16) is provided for the material strips, said roller being pivotable in the displaceable frame (4) and feedable into the region downstream of the deposit point of the building drum (3).

## Revendications

1. Dispositif servant à transporter des bandes de matériau en caoutchouc ou d'une matière plastique semblable à du caoutchouc et à appliquer de telles bandes de matériau sur un tambour de montage pour des pneumatiques ou des parties de pneumatiques, servant en particulier à appliquer d'étroites bandes de sommet sur un tambour à soufflet, où les bandes de matériau avançant sont coupées à la longueur à partir d'un matériau sans fin et positionnées sur une table modèle placée dans la zone du dispositif, où le dispositif comprend des dispositifs de réception, pivotants et mobiles dans la direction de transport, servant à saisir, au moins au niveau d'une extrémité, les bandes de matériau positionnées sur la table modèle, pour leur transport jusqu'à la position d'application et pour leur application sur le tambour de montage,
**caractérisé**
**en ce que** les dispositifs de réception (5, 19) sont mobiles dans une direction de transport (2) pratiquement tangentielle à la surface ou à la circonférence du tambour de montage (3), et présentent un ou plusieurs éléments de support pénétrant dans la bande de matériau (7, 21), lesquels éléments de support constituent une liaison par sûreté de forme, temporaire et amovible, avec la bande de matériau.

2. Dispositif selon la revendication 1, **caractérisé en ce que** les éléments de support pénétrant dans la bande de matériau (7, 21) sont configurés comme une ou plusieurs aiguilles (6) s'introduisant dans la bande de matériau, lesquelles aiguilles sont disposées en étant inclinées vers l'arrière par rapport à la direction de transport (2) de la bande de matériau, et **en ce que** le dispositif de réception (5, 19), pour l'introduction des aiguilles (6), est configuré en étant mobile parallèlement aux axes des aiguilles.

3. Dispositif selon la revendication 2, **caractérisé en ce que** les aiguilles s'introduisant dans la bande de matériau sont disposées sous la forme d'au moins deux rangées d'aiguilles placées l'une derrière l'autre, chaque rangée comportant au moins 4 aiguilles placées les unes à côté des autres et réparties de façon régulière sur la largeur de la bande de matériau.

4. Dispositif selon la revendication 2 ou 3, **caractérisé en ce que** les pointes d'aiguille des aiguilles (6) s'introduisant dans la bande de matériau sont configurées sous la forme d'une partie cylindrique (onglet cylindrique) (28), où les surfaces (29) de la partie cylindrique sont disposées en étant pratiquement perpendiculaires à la direction de transport et inclinées vers l'arrière par rapport à la direction de transport.

5. Dispositif selon les revendications 2 à 4, **caractérisé en ce que** les aiguilles (6) s'introduisant dans la bande de matériau sont disposées en étant inclinées vers l'arrière par rapport à la direction de transport (2) de la bande de matériau (7, 21), suivant un angle maximum de 55°.

6. Dispositif selon les revendications 1 à 5, **caractérisé en ce que** le dispositif est disposé sur un bâti (4) mobile de façon pratiquement tangentielle par rapport au tambour de montage et les dispositifs de réception sont disposés de façon à pouvoir pivoter autour d'un axe de rotation (11) monté en arrière dans la direction de transport, par rapport au point d'appui sur le tambour de montage (3), et logé dans le bâti mobile.

7. Dispositif selon les revendications 1 à 6, **caractérisé en ce qu'**une tôle de glissement ou de guidage est disposée entre la table modèle le tambour de montage, laquelle tôle de glissement ou de guidage supporte les bandes de matériau au cours du transport jusqu'au point d'appui.

8. Dispositif selon la revendication 6 ou 7, **caractérisé en ce qu'**il est prévu, pour les bandes de matériau, un rouleau presseur (16) pivotant dans le bâti mobile (4) et réglable dans la zone placée derrière le point d'appui du tambour de montage (3).
